Europäisches Patentamt

European Patent Office

Office européen des brevets

(11) Publication number: **0 368 780**
**A1**

## EUROPEAN PATENT APPLICATION

(21) Application number: **89500101.4**

(51) Int. Cl.5: **H04Q 9/00**

(22) Date of filing: **13.10.89**

(30) Priority: **31.10.88 ES 8803313**

(43) Date of publication of application:
**16.05.90 Bulletin 90/20**

(84) Designated Contracting States:
**AT BE CH DE ES FR GB GR IT LI NL SE**

(71) Applicant: **Fornes Callis, Juan**
**Gran Via 107**
**E-08330 Premia De Mar (Barcelona)(ES)**

(72) Inventor: **Fornes Callis, Juan**
**Gran Via 107**
**E-08330 Premia De Mar (Barcelona)(ES)**

(74) Representative: **Curell Sunol, Jorge et al**
**c/o Dr. Ing. M. Curell Sunol I.I. S.L. Passeig**
**de Gràcia 65 bis**
**E-08008 Barcelona(ES)**

(54) **Electronic arrangement for picking up signals from a group of external sensors.**

(57) The arrangement is peripheral to a computer (1) and comprises a network (2) formed by selector lines (4) and reception lines (6). A control unit (8) for the network (2) cyclically drives a single selector line (4) and is provided further with a d.c. supply means (10). An interface unit (12) is provided with means for storing the activated selector line and with means of communication between the storage means and the computer (1). Between each selector line (4) and each reception line (6) there is a connection means (16) comprising a switch means (20) connected in series with a semiconductor (22) biased in the sole direction of passage from the reception line (6) to the selector line (4).

FIG. 1

EP 0 368 780 A1

## ELECTRONIC ARRANGEMENT FOR PICKING UP SIGNALS FROM A GROUP OF EXTERNAL SENSORS.

This invention relates to an electronic arrangement for picking up signals from a group of external sensors, the arrangement being peripheral to a processing computer. The installations for fulfilling such functions are simplified and made cheaper by this arrangement.

Currently there are two different, quite opposite ways of connecting a computer system to a multiplicity of peripheral electronic and industrial apparatus. so that the computer system may pick up and process external signals, i.e. from such peripheral aparatus. In a first known embodiment, the computer system operates as a central computer and is provided with centralized signal interface means comprising a specific signal interface circuit for each of the peripheral signals to be picked up, the connection being effected by means of a couple of electrical cables extending from said central computer to the peripheral aparatus in question, with a radial connection system in the centre of which the computer is located forming the pick up network. This system raises the cost of laying and installing lines, at the same time as the cost of the system increases enormously for the need to have a bulky centralized interface cabinet or rack, whereby the inherent advantages of a centralized intelligence are enervated by the high cost of such systems and installations; furthermore, in view of the essentially sequential structure of a computer in signal processing, although the peripheral electrical signals are simultaneously present at the computer interface means, this does not mean that they will be processed simultaneously, but their processing speed will depend on the organization of the instruction sequence or programme operating in the central computer.

A second known embodiment is mentioned below. The present state of the art, with the introduction of micro processors and the cheapening of cost that this has involved, has allowed the setting up of network systems with distributed intelligence, with networks being organized by way of the connection of a multiplicity of local computers to a central computer acting as "master" of the others, and, in modern versions, even the so-called central "master" computer is dispensed with.

The foregoing embodiments, which are fully warranted when each of the computers is performing complex, frequently diverse, functions and processess under the control of different operators, in which the processed data and the programmes stored in the computer file units, as well as the peripheral units such as high speed printers and the like, must be shared by all of them, or selectively for one of them, are unwarranted when they are used as concentrators of external signals from peripheral electronic and industrial aparatus connected radially to such local computers which, in turn, will generally be connected to a central computer which will process the information provided by the local computers. Such systems do not form a distributed intelligence, but are hierarchical systems in which intermediate steps have been introduced to alleviate the volume and installation costs proper to the centralized intelligence systems and radial line layouts, and in which the savings will be lost by the increased cost of the computer group.

It is an object of the invention to provide a further alternative whereby greater advantages will be obtained. This is achieved by an arrangement characterized in that it comprises: a plurality of selector lines; a plurality of reception lines forming a network with said selector lines; a network control unit containing drive circuits for each selector line adapted cyclically to activate a single selector line under computer control, reception circuits for each reception line and direct current supply means connected to said drive and reception circuits; a unit for interfacing with the processing computer, said interface unit comprising storage means for the activated selector line and the signals picked up by the reception lines and communication means between the computer and said storage means; a galvanic insulations means between said network control unit and said interface unit; and means for connecting each selector line to each reception line, each of said means comprising a switch means connected in series with at least one semiconductor member biased in one side direction from the reception line to the selector line, preventing the passage of derived signals across unactivated reception lines and selector lines.

The arrangement of the invention has the advantages inherent in the centralized intelligence of uniqueness and speed in the processing of signals at the same time as it minimises the costs of interfacing, installation and laying of lines. The interface unit performs the function of communication with the computer which transmits thereto the order of the selector line drive cycles, with the unit transmiting the data picked up in each cycle on each of the reception lines to the computer. This communication performed with standard computer systems may be executed by the RS-232 gate, by the computer printer gate or others.

The interface unit is coupled to the network control unit by elements such as the optical couplers provided with galvanic insulation and which, having signal conditioning circuitry are connected to the selector lines and the reception lines which form the network. The network control unit also comprises d.c. supply means generating the biased electrical current flowing through the network.

In one embodiment the electronic processing computer may form part of the apparatus and communicate in the same way with the communications unit.

The invention is further described hereinafter with the aid of the accompanying drawings illustrating one embodiment of the invention and in which:

Figure 1 is a schematic illustration of the electronic arrangement of the invention; and

Figure 2 is also a schematic illustration of one embodiment of the connection means between a selector line and a reception line.

The arrangement of the invention is peripheral to a processing computer 1 and comprises, on the one hand, a network 2 formed by the layout of selector lines 4 and the layout of reception lines 6. Each selector line 4 is connected to a drive circuit and each reception line is connected to a reception circuit. Said circuits are located in the network control unit 8 and are not specifically shown. Said network control unit 8 also comprises d.c. supply means 10 connected to the reception circuits and to the supply circuits.

The arrangement also comprises a unit 12 for interfacing with the processing computer 1 and said unit 12 is provided with communications means and storage means to be described hereinafter. A galvanic insulation 14 is located between the interface unit 12 and the network control unit 8.

The logic arrangement of the network is that of a bidimensional matrix, the rows and columns of which are respectively selector lines 4 and reception lines 6 or vice versa. Connection means 16 are located between each selector line and reception line so that each connection means 16 occupies an exclusive box of said matrix.

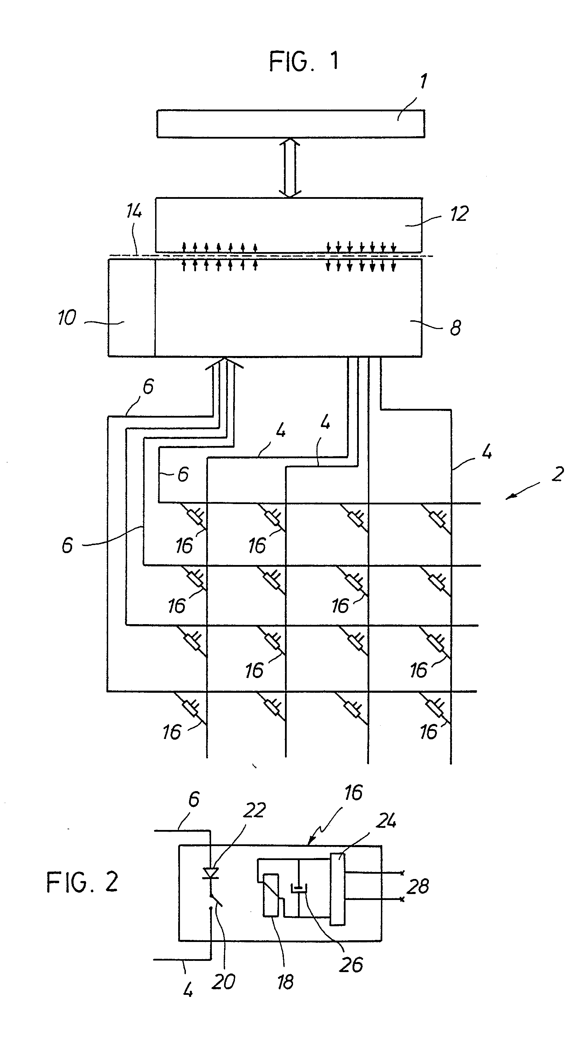

The said connection means 16, one embodiment of which is shown in Figure 2, are provided with an opening or closing member, such as an electromechanical relay with coil 18 and contact or switch means 20, in series with a semiconductor member 22, such as a diode. The connection means 16 are connected to the selector lines 4 and reception lines 6 in such a way as to form an exclusive pair of lines for each connection means. The semiconductor member 22 is connected in the direction of the biased electrical current. Preferably the connection means comprise means 24 for rectifying, means 26 for filtering and limiting electrical signals 28 from a set of external sensors. Such means drive the coil 18 of the electromechanical relay.

According to one embodiment, the connection means 16 is configured by associating the relay contact 20 with the coil appropriate to the level of the direct or alternating current signal of the external signal 28, in series with a semiconductor member 22 and both to the lines of the network 2, as described above.

In one application, the connection means 16 is a contact connected in series with a semiconductor member and is manually actuated for insertion of messages into the network.

The network control unit 8 execute cycles under control of the processing computer 1. In each of them, the drive circuits drive a single selector line 4, deactivating the others and thereafter the open or closed state of each of the connection means 16 which have been connected to the activated selector line is detected by way of the reception circuits by the absence or presence of current in the reception circuits thereof, which data is stored by the unit in its storage means.

The remaining connection means 16 connected to the network 2 will not affect the reception circuits because, with their selector lines being inactivated, the semiconductor member 22 will prevent the flow of derived reverse currents which would have flowed from a reception line 6 to an inactivated selector line 4 through a closed connection means 16 and from the latter to another reception line by the same system.

The computer system orders drive sequences of a selector line 4 each time, to read the state of all the connection means 16 connected to the network 2, which is effected by way of the said reception circuits, which in each step of the sequence read a specific set of connection means, which are the ones connected to the activated selector line. The signals picked up by the reception lines 6 are stored in the said storage means. There are, in turn, communication means between the computer and the storage means.

The present data pick up and processing network reduces the interface and instalation without loss of speed characteristics, since n x m connection means 16 may be connected by n reception circuits and corresponding reception lines 6 and m drive circuits and corresponding selector lines 4 and in the optimum case in which the network is disposed as a square matrix, $n^2$ external sensors will be connected with n pairs of circuits and lines.

The arrangement of the invention allows a wide range of signals from electronic and industrial apparatus to be picked up. Such signals are susceptible of activating open and closed states of electronic elements such as electromechanical relays, solid state relays and optical couplers in general, which insulate the external signals from the electrical currents of the network, one application being the signals from counting and stop-start sensors of industrial machinery.

Preferably the arrangement is provided with means for reversing the direction of the current flow through the network 2, which will operate in specific control sequences to detect faults in the installation of the connection means 16, such as the reverse connection of a semiconductor element 22 or a shortcircuit between selector and reception lines, which faults would cause a signal to appear on one or more of the reception lines. In the absence of a fault, the semiconductors 22 prevent the flow of the reverse current which it is attempted to induce in such control sequences.

Claims

1.- An electronic arrangement for picking up signals from a group of external sensors, the arrangement being peripheral to a processing computer (1), characterized in that it comprises: a plurality of selector lines (4); a plurality of receptions lines (6) forming a network (2) with said selector lines (4); a network control unit (8) containing drive circuits for each selector line adapted cyclically to activate a single selector line (4) under computer (1) control, reception circuits for each reception line and direct current supply means (10) connected to said drive and reception circuits; a unit (12) for interfacing with the processing computer (1), said interface unit (12) comprising storage means for the activated selector line (4) and the signals picked up by the reception lines (6) and communication means between the computer (1) and said storage means; a galvanic insulations means (14) between said network control unit (8) and said interface unit (12); and means (16) for connecting each selector line (4) to each reception line (6), each of said means (16) comprising a switch means (20) connected in series with at least one semiconductor member (22) biased in one sole direction from the reception line (6) to the selector line (4), preventing the passage of derived signals across unactivated reception lines (4) and selector lines (6).

2.- The arrangement of claim 1, characterized in that each switch means (20) may be modulated, activated or deactivated by at least one member of said sensor group, being galvanically isolated from each other.

3.- The arrangement of claim 1 or 2, characterized in that it is provided with means for reversing the one way passage of the signals in the network (2) lines.

4.- The arrangement of any one of the previous claims, characterized in that said sensor group comprises relay contacts, solid state optical couplers, mechanically actuatable contacts and/or light transistors.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 530 055  (AGENCE CENTRALE DE SERVICES ACDS) <br> * Page 5, line 1 - page 11, line 36; page 14, line 1 - page 15, line 15; page 18, line 32 - page 19, line 8; figures 1,2 * <br> ----- | 1-4 | H 04 Q    9/00 |

TECHNICAL FIELDS
SEARCHED (Int. Cl.5)

H 04 Q

The present search report has been drawn up for all claims

| Place of search | Date of completion of the search | Examiner |
|---|---|---|
| THE HAGUE | 23-02-1990 | WANZEELE R.J. |